# EUROPEAN PATENT APPLICATION

(11) **EP 2 002 927 A1**
(43) Date of publication of application: **17.12.2008**
(21) Application number: 07011354.3
(22) Date of filing: 11.06.2007
(51) Int. Cl.: B23Q 3/18

(54) **Device for holding and positioning of an object or a workpiece**

(71) Applicant: System 3R International AB, 162 50 Vällingby (SE)
(72) Inventor: Sabanac, Jasko, 117 59 Stockholm (SE)
(74) Representative: Weiss, Wolfgang

(57) **Abstract**

A device (1) for holding and positioning of an object or a workpiece, consisting of a base part (2), an intermediate part (3) and a levelling part (4) for accurately levelling the object or the workpiece, where the levelling part (4) has a mounting surface (5) for mounting the object or the workpiece with reference to a plane extending in the X- and Y-directions of an X-Y-Z system of coordinates. The intermediate part (3) and the levelling part (4) both have a cross-section in the shape of a letter L, where the outer lying corner edge (8) of the levelling part (4) is arranged opposite the inner lying corner edge (11) of the intermediate part (3) and where a resilient spring plate (18) having a cross section in the shape of a letter L is arranged between the intermediate part (3) and the levelling part (4).

## Description

The invention relates to a device for holding and positioning of an object or a workpiece, consisting of a base part, an intermediate part and a levelling part for accurately levelling the object or the workpiece, where the levelling part has a mounting surface for mounting the object or the workpiece with reference to a plane extending in the X- and Y-directions of an X-Y-Z system of coordinates.

Workpieces or objects that are being machined need to be positioned and held as accurately as possible. Especially in a wire electric discharge machining environment, where machining accuracy in the order of magnitude of 1 micron is achieved, the exact and reproducible positioning and holding becomes very important. Holding and positioning devices usually are designed as horizontal chucks arranged above the workpiece. In wire electric discharge machines the free space where the wire tool can do the machining work is limited by the upper part where the wire is guided from the feed rolls, as well as by the lower part where the spent wire is guided to the winding rolls. Turning around a horizontal head by 90° to a vertical arrangement would make the machining apparatus too large. Also the torsion moment acting on such a tilted horizontal chuck would be too large to guarantee the high precision required.

In US 5487538 there is disclosed a workpiece holding assembly for levelling a workpiece in a wire electric discharge machine comprising a base module and a release module. The modules comprise three basic components which adjustably interconnect in a cooperating relationship to each other and to a workpiece clamping means.

Based on this prior art it is an object of the invention to specify a device for holding and positioning of large and heavy objects or workpieces that is as compact as possible and that is easier to manufacture. The device should have means for adjusting the position of the object or workpiece as precisely as possible in a wire electric discharge machine.

The foregoing object is achieved by a device for holding and positioning of an object or a workpiece, consisting of a base part, an intermediate part and a levelling part for accurately levelling the object or the workpiece, where the levelling part has a mounting surface for mounting the object or the workpiece with reference to a plane extending in the X- and Y-directions of an X-Y-Z system of coordinates, where the intermediate part and the levelling part both have a cross-section in the shape of a letter L, where the outer lying corner edge of the levelling part is arranged opposite the inner lying corner edge of the intermediate part and where a resilient plate having a cross section in the shape of a letter L is arranged between the intermediate part and the levelling part.

It is advantageous that the device can be manufactured with a small number of parts. This is achieved by a swinging pin arranged horizontally in a first bore in the horizontal leg of the intermediate part and cooperating with a second bore through a lug extending vertically from the horizontal leg of the levelling part for holding the levelling part rotatably in relation to the intermediate part around the Y-axis of the swinging pin. This is also achieved by the lug comprising two tapered ribs on one vertical face of the lug arranged inline and perpendicularly with respect to the Y-axis of the swinging pin for holding the levelling part rotatably in relation to the intermediate part perpendicular to the Y-axis of the swinging pin.

An exemplary embodiment of the invention is described with reference to the figures. In the drawings:
Figure 1 shows a perspective view of a device for holding and positioning of an object or a workpiece according to the invention,
Figure 2 shows a perspective view of the intermediate part and the levelling part of the device in FIG. 1,
Figure 3 shows a perspective exploded view of the intermediate part and the levelling part of the device in FIG. 1 seen from another angle,
Figure 4 shows a further perspective exploded view of the intermediate part and the levelling part of the device in FIG. 1 seen from yet another angle,
Figure 5 shows a view on the intermediate part and the levelling part of the device in FIG. 1 seen in the direction of the Y-axis of an X-Y-Z system of coordinates,
Figure 6 shows a cross-section of the intermediate part and the levelling part of the device in FIG. 1 seen in the direction of the X-axis of an X-Y-Z system of coordinates,
Figure 7 shows a perspective view of a spring plate used in the device according to the invention and
Figure 8 shows a perspective view of a further device for holding and positioning of an object or a workpiece according to the invention.

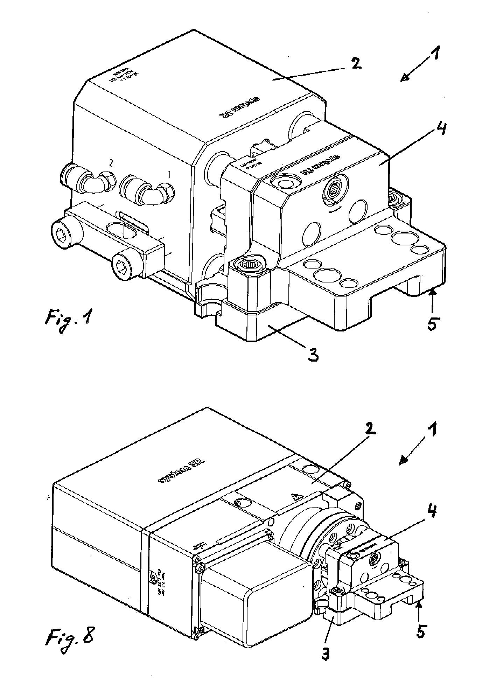

Figure 1 is a perspective view of a vertical acting chuck together with a vertical levelling head for holding and positioning of an object or a workpiece in a wire electric discharge machine. The device 1 seen from left to right consists of a base part 2, in this case represented by the vertical acting chuck, an intermediate part 3 and a levelling part 4, where the intermediate part 3 and the levelling part 4 cooperate together as the levelling head. Both the workpiece and the wire electric discharge machine are not shown in this drawing. The workpiece can be fixed with its flat top surface to the bottom side of the levelling part 4 having a mounting surface 5.

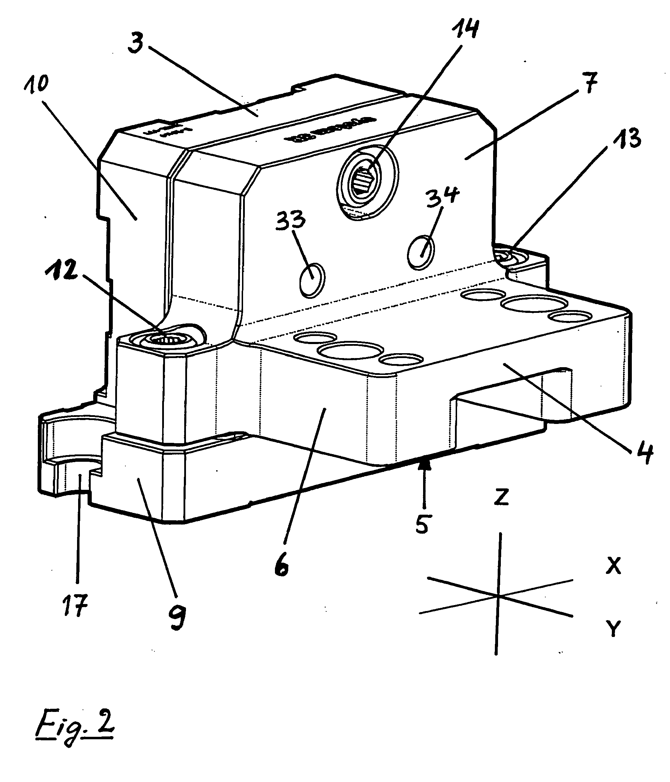

Figure 2 shows the intermediate part 3 and the levelling part 4 clamped together and oriented with respect to the X-Y-Z reference system of coordinates. Both the intermediate part 3 and the levelling part 4 have a cross-section in the shape of a letter L. The levelling part 4 essentially consists of a horizontal leg 6 and a vertical leg 7 and has an outer lying corner edge 8. The outer lying corner edge 8 is defined by the line where the outer faces of the horizontal leg 6 and the vertical leg 7 come together. In the same way the intermediate part 3 consists of a horizontal leg 9 and a vertical leg 10 and has an inner lying corner edge 11. The inner lying corner edge 11 is defined by the line where the inner faces of the horizontal leg 9 and the vertical leg 10 come together.

The levelling part 4 can be fixed to the intermediate part 3 by means of three adjustment screws 12, 13, 14. A first pair of adjustment screws 12, 13 is used for adjusting the workpiece with respect to the X-Z plane of the reference system, i.e. by rotation about the Y-axis. The third adjustment screw 14 is used for adjusting the workpiece with respect to the Y-Z plane of the reference system, i.e. by rotation about the X-axis.

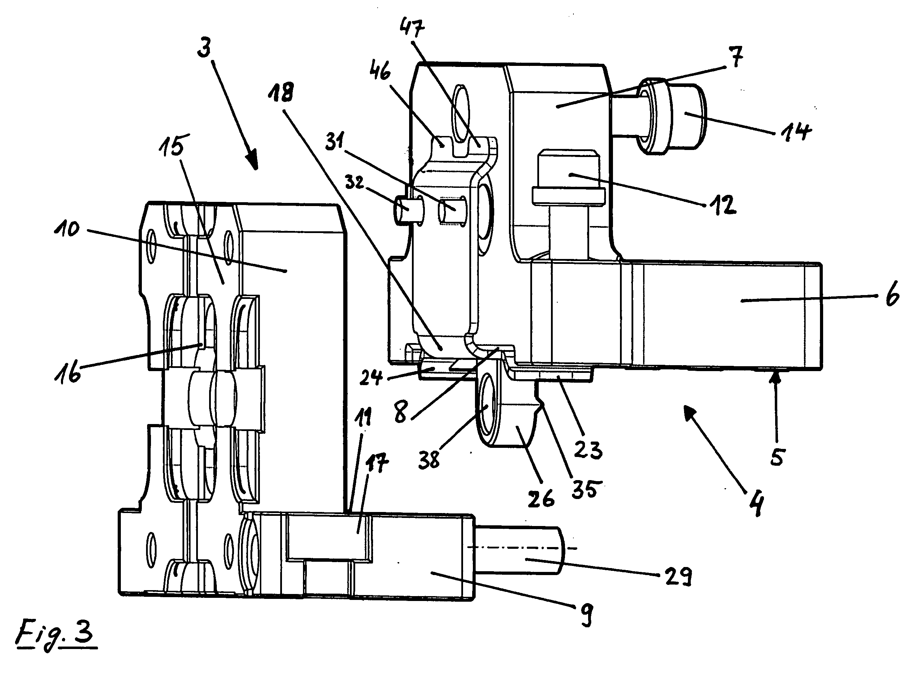

In Figure 3 the levelling part 4 and the intermediate part 3 are shown under another angle of perspective. The intermediate part 3 has at the vertical leg 10 a vertical rear face 15 that is equipped with a mechanical coupling system having elastic tongues 16 for establishing an accurate mechanical connection to the base part 2. The horizontal leg 9 of the intermediate part 3 has also screw holes 17 for mounting bolts (not shown) to mount the device 1 directly to a machine table. Alternatively the intermediate part 3 could also be mounted to the head 30 of a tool drive e.g. the machining spindle of the Y-axis of a machining system, the so-called B-axis. This embodiment of the invention is shown schematically in Figure 8.

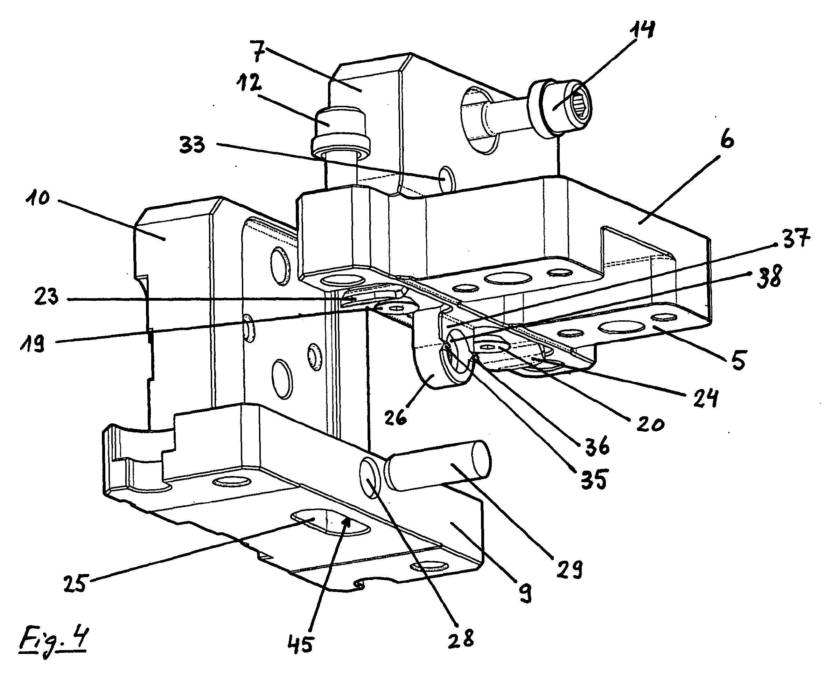

The functioning of the device 1 can best be understood by Figure 3 together with Figure 4. Firstly an L-shaped resilient or spring plate 18 is fixed to the L-shaped levelling part 4. A pair of first screws 19, 20, shown in Figure 4, is used to fix the horizontal leg 21 of the spring plate 18 to the horizontal bottom face 22 of the horizontal leg 6 of the levelling part 4. The horizontal leg 21 of the spring plate 18 also has downward bended wings 23, 24 for applying a separating force between the levelling part 4 and the intermediate part 3, acting in the direction of the Z-axis. Thereby the system can be preloaded for increased rigidity.

Secondly the levelling part 4, together with the spring plate 18 is placed upon the intermediate part 3. As can best be seen from Figure 4 the intermediate part 3 has in the middle of the horizontal leg 9 a vertical receiving aperture 25 for receiving a lug 26 extending vertically from the middle of the horizontal leg 6 of the levelling part 4. The receiving aperture 25 has at least one wall portion 45 arranged perpendicular to the Y-axis of the system.

After applying a force in the direction of the Z-axis to the levelling part 4 a second horizontal bore 27 through the lug 26 coincides with a first horizontal bore 28 through the horizontal leg 9 of the intermediate part 3, so that a swinging pin 29 can be inserted consecutively through the first horizontal bore 28 in the horizontal leg 9 of the intermediate part 3 and the second horizontal bore 27 in the lug 26 of the levelling part 4. The swinging pin 29 is of a cylindrical shape, having an outside diameter considerably smaller than the overall inner diameter of the second horizontal bore 27 through the lug 26.

Now the spring plate 18 can be fixed by means of a second pair of fixing screws 31, 32 to the vertical leg 10 of the intermediate part 3. Holes 33, 34 for driving the screws 31, 32 from the outside of the levelling part 4 can be seen in Figures 2 and 4. After the coupling of the levelling part 4 of the device 1 to the intermediate part 3 the spring plate 18 is fixed not only by the first pair of screws 19, 20, to the levelling part 4 but also by the second pair of screws 31, 32 to the intermediate part 3, thereby establishing a rigid but resilient mechanical connection of the levelling part 4 to the intermediate part 3.

As can be seen from Figure 3 and 4, the lug 26 also has two tapered ribs 35, 36 extending in the horizontal direction from a vertical face 37 of the lug 26 and ending in a sharp edge. The edges of the tapered ribs 35, 36 are arranged inline and at the same distance from the vertical face 37 of the lug 26. Therefore the ribs 35, 36 of the lug 26 of the levelling part 4 can establish a line contact between the levelling part 4 and the wall portion 45 of the vertical aperture 25 in the horizontal leg 9 of the intermediate part 3. The contact line acts as a fulcrum for rotational movement of the levelling part 4 with respect to the intermediate part 3 rotating around an axis in parallel to the X-axis of the system i.e. perpendicular to the Y-axis of the swinging pin 29. The force of the spring plate 18 ensures that the ribs 35, 36 are always in contact with the wall 45 of the aperture 25.

In the same way a movement between the swinging pin 29 and the circular inner wall of the horizontal bore 27 through the lug 26 is made possible. On the circular inner wall of the bore 27 at a narrower inner diameter than the overall inner diameter of the bore 27 there is arranged a circular edge at the end of a tapered inner ring 38 extending from the wall of the bore 27. This circular edge allows a swinging movement perpendicular to the axis of the swinging pin 29. Hereby the play between the intermediate part 3 and the levelling part 4 is greatly reduced and the adjustment of the positioning procedure is made easier and more accurate. The mechanical connection between the swinging pin 29 that is located in the intermediate part 3 on one hand and the levelling part 4 on the other hand enables a swinging movement of the device 1 together with almost no play between the moving parts, therefore increasing the rigidity of the device 1.

Adjustment of the workpiece around the Y-axis is achieved by first fixing one of the vertical adjustment screws 12, 13. The second vertical adjustment screw is then tightened, thereby increasing rigidity of the system. The adjustment around the X-axis is then done by fixing the upper horizontal third adjustment screw 14. The spring plate 18 is constantly acting with a spring force between the intermediate part 3 and the levelling part 4 in both directions. Adjustment of the position of the workpiece is therefore possible in both directions.

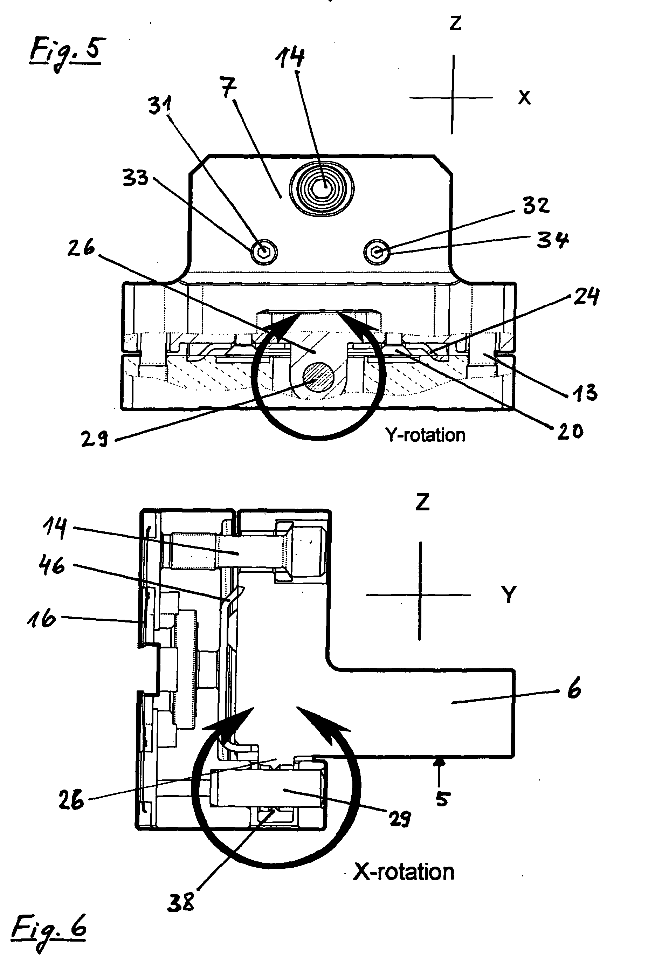

The side view of Figure 5 shows the rotation of the levelling part 4 with respect to the intermediate part 3 around the Y-axis of the X-Y-Z coordinate reference system. The coordinate system only defines the directions of the axes but not the locations of the axes.

Figure 6 shows a cross-section of the intermediate part 3 and the levelling part 4 of the device 1 seen in the direction of the X-axis of the X-Y-Z system of coordinates. Here the rotational movement of the levelling part 4 with respect to the intermediate part 3 around the X-axis of the system can be seen. The relationship between the circular edge of the tapered inner ring 38 on the inner wall of the bore 27 in the lug 26 and the swinging pin 29 that is inserted in the horizontal bore 28 in the horizontal leg 9 of the intermediate part 4 can also be seen.

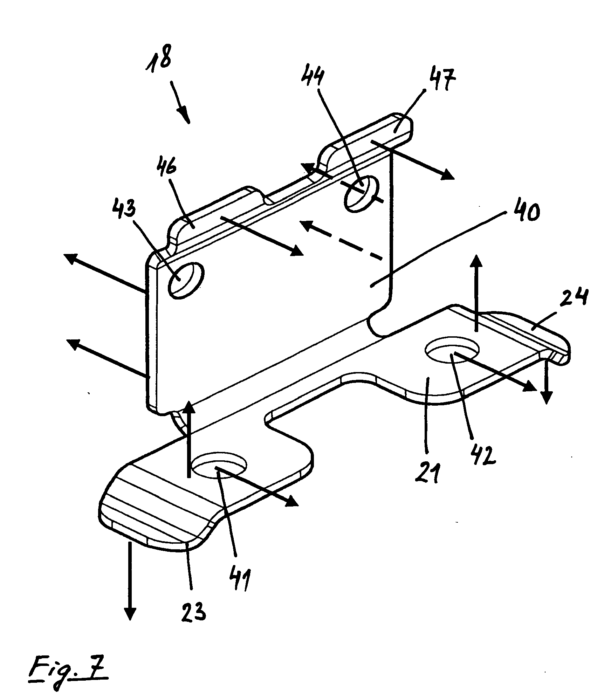

Figure 7 shows the spring plate 18 having a cross-section in the shape of a letter L. Both the vertical leg 40 and the horizontal leg 21 of the spring plate 18 have passages 41, 42, 43, 44 for the fixing screws 19, 20, 31, 32 as well as bended wings 23, 24, 46, 47 for applying separating forces to the intermediate part 3 and the levelling part 4 acting in the direction of the Y- and Z-axes.

As mentioned above Figure 8 shows an alternative use of the device 1. Here the intermediate part 3 is fixed to a head of a driving spindle for rotational driving a machining tool about the Y-axis of the machining system.

## Claims

1. A device (1) for holding and positioning of an object or a workpiece, consisting of a base part (2), an intermediate part (3) and a levelling part (4) for accurately levelling the object or the workpiece, where the levelling part (4) has a mounting surface (5) for mounting the object or the workpiece with reference to a plane extending in the X- and Y-directions of an X-Y-Z system of coordinates, **characterized in that** the intermediate part (3) and the levelling part (4) both have a cross-section in the shape of a letter L, where an outer lying corner edge (8) of the levelling part (4) is arranged opposite an inner lying corner edge (11) of the intermediate part (3 ) and where a resilient plate (18) having a cross section in the shape of a letter L is arranged between the intermediate part (3) and the levelling part (4).

2. The device (1) for holding and positioning of an object or a workpiece according to claim 1, **characterized in that** a swinging pin (29) is arranged horizontally in a first bore (28) in the direction of the Y-axis in the horizontal leg (9) of the intermediate part (3) and cooperating with a second horizontal bore (27) through a lug (26) extending vertically from the horizontal leg (6) of the levelling part (4) for holding the levelling part (4) rotatably in relation to the intermediate part (3) around the Y-axis of the swinging pin (29).

3. The device (1) for holding and positioning of an object or a workpiece according to at least one of the claims 1 or 2, **characterized in that** the lug (26) comprises two tapered ribs (35, 36) on one vertical face (37) of the lug (26) arranged inline and perpendicularly with respect to the Y-axis of the swinging pin (29) for holding the levelling part (4) rotatably in relation to the intermediate part (3) perpendicular to the Y-axis of the swinging pin (29).

4. The device (1) for holding and positioning of an object or a workpiece according to at least one of claims 1 to 3, **characterized in that** the resilient or spring plate (18) is arranged bolted by a first pair of screws (19, 20) to the levelling part (4) and by a further pair of screws (31, 32) to the intermediate part (3).

5. The device (1) for holding and positioning of an object or a workpiece according to at least one of claims 1 to 4, **characterized in that** the L-shaped resilient plate (18) comprises wings (23, 24, 46, 47) for preloading spring forces acting in the direction of and perpendicular to the Y-axis of the swinging pin (29) respectively.

6. The device (1) for holding and positioning of an object or a workpiece according to at least one of claims 1 to 5, **characterized in that** the levelling part (4) comprises two adjustment screws (12, 13) arranged in parallel to the Z-axis for holding and positioning the object or the workpiece accurately with respect to the Y-axis of the coordinate system.

7. The device (1) for holding and positioning of an object or a workpiece according to at least one of claims 1 to 6, **characterized in that** the levelling part (4) comprises a third adjustment screw (14) arranged in parallel to the Y-axis for holding and positioning the object or the workpiece accurately with respect to the X-axis of the coordinate system.

8. The device (1) for holding and positioning of an object or a workpiece according to at least one of claims 1 to 7, **characterized in that** the vertical leg (10) of the L-shaped intermediate part (3) has a vertical rear face (15) having elastic clamping tongues (16) to be accurately attached to the vertical face of the base part (2), where the base part (2) consists of a vertically arranged clamping device movable in the direction of the horizontal axis of the clamping device.

9. The device (1) for holding and positioning of an object or a workpiece according to at least one of claims 1 to 7, **characterized in that** the vertical leg (10) of the L-shaped intermediate part (3) has a vertical rear face (15) to be attached to the vertical face of the base part (2), where the base part (2) consists of a vertically arranged head rotatable about the horizontally arranged Y-axis of a spindle drive of a machine tool.

10. The device (1) for holding and positioning of an object or a workpiece according to at least one of claims 1 to 9, **characterized in that** the device (1) is used for accurately levelling the object or the workpiece in a wire electric discharge machine.
